# EUROPÄISCHE PATENTSCHRIFT

(11) **EP 1 211 482 B1**
(45) Veröffentlichungstag und Bekanntmachung des Hinweises auf die Patenterteilung: **02.02.2005**
(21) Anmeldenummer: 01126923.0
(22) Anmeldetag: 13.11.2001
(51) Int. Cl.: G01B 21/22, G01D 5/347

(54) **Winkelmesssystem**
Angle measuring system
Système de mesure d'angle

(30) Priorität: 30.11.2000 AT 20132000
(43) Veröffentlichungstag der Anmeldung: 05.06.2002
(73) Patentinhaber: Dr. Johannes Heidenhain GmbH, 83292 Traunreut (DE)
(72) Erfinder: Peterlechner, Andreas, 5121 St. Radegund (AT); Lepperdinger, Gotthard, 5110 St. Georgen (AT)

(56) Entgegenhaltungen:
- DE-A- 4 331 668
- DE-A- 19 751 019
- DE-C- 19 611 983

## Beschreibung

Die Erfindung betrifft ein Winkelmeßsystem nach dem Oberbegriff des Anspruches 1. Solche Winkelmeßsysteme finden vor allem Anwendung, wenn große Radien für die Winkelmessung herangezogen werden, beispielsweise an Rundtischen oder Teleskopen.

Längs des Umfanges eines zu erfassenden Objektes wird dabei zur Messung der Winkelstellung ein Maßband, üblicherweise aus Stahl, mit einer darauf angebrachten Teilung befestigt. Soll die Messung über volle 360 Grad erfolgen, so ist darauf zu achten, daß bei einer Messung über die Stoßstelle der beiden Enden des Maßbandes kein Meßfehler durch eine evtl. vorhandene Lücke in der Teilung entsteht.

Im Buch Digitale Längen- und Winkelmeßtechnik" von Alfons Ernst, Die Bibliothek der Technik, Band 165, Verlag Moderne Industrie,1998, Seiten 69 bis 70, wird beschrieben, wie ein Stahlband mit Teilungsstrichen in die Nut eines Teilungsrades eingelegt und mittels eines Spannschlosses gespannt wird. Beim Spannen kommt es jedoch auf dem Umfang des Teilungsrades zu tangentialen Reibungskräften zwischen Maßband und Teilungsrad, die das Maßband längs seines Umfanges unterschiedlich stark ausdehnen, und so zu Abweichungen in der Winkelmessung führen können. Will man zusätzlich die Stoßstelle zwischen den Maßbandenden so justieren, daß bei der Abtastung an dieser Stelle kein Sprung im Abtastsignal auftritt, so ist die Spannkraft nicht mehr den Gegebenheiten (z.B. auftretende Fliehkräfte) anzupassen, sondern entspricht gerade der nötigen Justierkraft.

In der DE 19751019 A1 der Anmelderin ist ein ähnliches Winkelmeßsystem beschrieben, bei dem mit einer besonderen Vorrichtung erreicht wird, daß an beiden Enden des Maßbandes die gleiche Spannkraft eingeleitet wird. Dadurch wird eine Reduktion des Winkelfehlers durch ungleichmäßige Ausdehnung oder Stauchung des Maßbandes erzielt, im Vergleich zu Systemen, bei denen ein Ende des Maßbandes fest mit seiner Unterlage verbunden ist, und nur auf das zweite Ende eine Spannkraft ausgeübt wird. Es wird weiter vorgeschlagen, zur Reduktion der Reibung zwischen Maßband und Unterlage eine elastische Schicht vorzusehen. Nachteilig an der vorgeschlagenen Lösung ist zum einen, daß sie nicht in Systemen eingesetzt werden kann, die eine volle Drehung um 360 Grad erfassen müssen, zum anderen, daß durch die Spannvorrichtung weiter Kraft direkt auf das Maßband ausgeübt wird, und so durch die weiterhin auftretenden Reibungskräfte Bereiche mit unterschiedlicher Ausdehnung des Maßbandes auftreten.

Aufgabe der Erfindung ist es, ein Winkelmeßsystem mit einem Maßband anzugeben, bei dem die Stoßjustage der Maßbandenden von der Montage des Maßbandes auf dem zu vermessenden Körper weitgehend entkoppelt ist.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Das vorgeschlagene Winkelmeßsystem besteht aus einem Maßband mit einer Teilung, das über eine in radialer und tangentialer Richtung elastische Schicht auf einem separaten Spannring befestigt ist. Vorteilhafterweise kann schon bei der Herstellung dieser Struktur aus Spannring, elastischer Schicht und Maßband eine Justierung der beiden Maßbandenden mittels einer Justiervorrichtung erfolgen. Zur Montage wird diese Struktur dann über den Spannring am zu vermessenden Körper befestigt. Dabei treten zwar durch die Reibung zwischen Spannring und Körperoberfäche tangentiale Kräfte auf, die den Spannring lokal verformen, die elastische Schicht überträgt diese Verformung aber nicht oder nur zu einem sehr kleinen Teil auf das Maßband. Bei der Montage muß die Stoßjustage nicht wiederholt werden, beide Vorgänge sind entkoppelt. Der Montageaufwand für den Käufer des Winkelmeßsystemes ist sehr gering. Natürlich kann die Stoßjustage auch nach der Montage des Spannrings erfolgen. Ein weiterer positiver Effekt ist, daß etwa beim Anbau an eine Welle kleinere Abweichungen vom idealen Wellendurchmesser von der elastischen Schicht ausgeglichen werden können. Die Anforderungen an die Bearbeitungsgüte der Welle sinken also, das Maßband wird selbstzentrierend angebaut.

Weitere Vorteile sowie Einzelheiten der vorliegenden Erfindung ergeben sich aus der nachfolgenden Beschreibung verschiedener Ausführungsformen anhand der Figuren. Dabei zeigt
- Figur 1: ein Winkelmeßsystem, angebaut an eine Welle,
- Figur 2: das Winkelmeßsystem in einer weiteren Ansicht,
- Figur 3A: einen Schnitt durch das Winkelmeßsystem,
- Figur 3B: einen Schnitt durch eine weitere Ausführung des Winkelmeßsystemes, sowie
- Figur 4: ein Winkelmeßsystem, eingebaut in eine Hohlwelle.

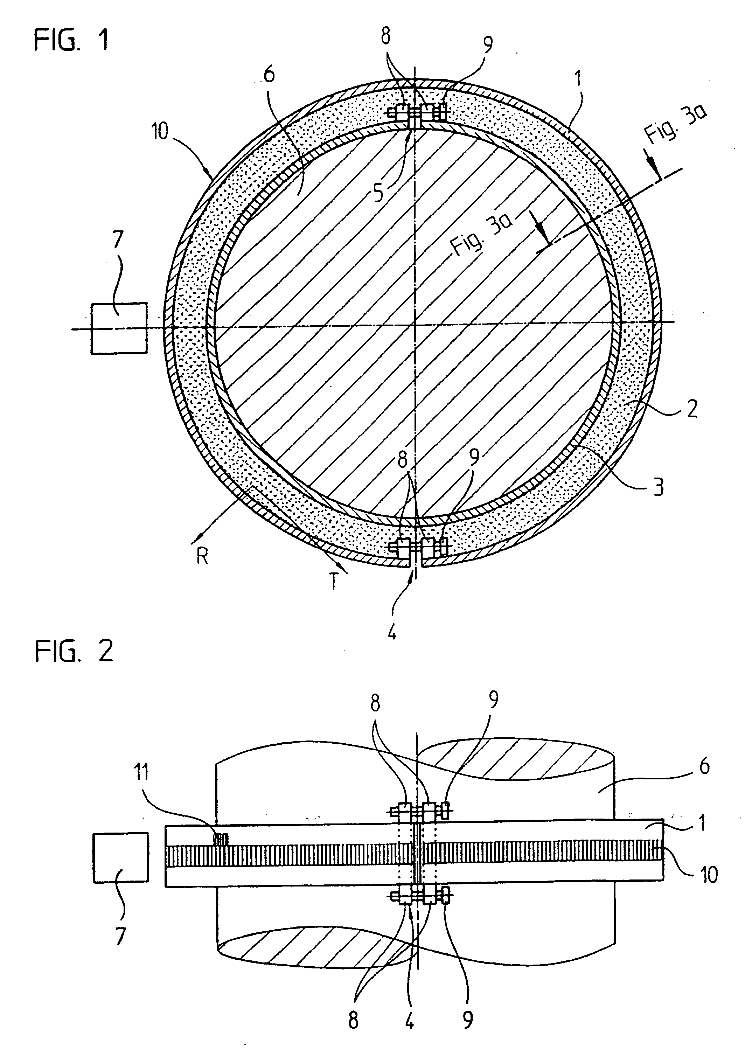

In den Figuren 1 und 2 ist ein Winkelmeßsystem in verschiedenen Ansichten gezeigt. Ein Maßband 1 mit einer Teilung 10 besteht beispielsweise aus einem Stahlband, auf dem die Teilung 10 durch Prägung oder lithographische Verfahren aufgebracht wurde. Die Teilung 10 wird von einem Lesekopf 7 abgetastet, dessen Signale in einer nicht gezeichneten Folgeelektronik ausgewertet und in eine Winkelstellung umgerechnet werden können. Um absolute Winkelinformationen zu erhalten, kann zusätzlich zur Teilung 10 eine Referenzmarke 11 ausgelesen werden, oder auch eine mehrspurige absolute Teilung verwendet werden.

Um das Maßband 1 zur Messung der Winkelstellung eines zu vermessenden Körpers 6, im weiteren auch mit Welle 6 bezeichnet, zu befestigen, wird das Maßband 1 auf einer elastischen Schicht 2 beispielsweise durch Verkleben befestigt. Die elastische Schicht 2 kann etwa aus doppelseitigem Acrylatschaum - Klebeband oder aus Elastomeren wie Silikonkautschuk bestehen. Vorteilhaft ist, daß diese elastische Schicht 2 in tangentialer Richtung T und radialer Richtung R elastisch ist. Die elastische Schicht 2 ist wiederum auf einem Spannring 3 befestigt, der über seine Spannvorrichtung 5 auf der Welle 6 befestigt werden kann.

Die beiden Enden des Maßbandes 1 können über die Justiervorrichtung 4 verbunden und so zueinander justiert werden, daß die Teilung 10 an der Stoßstelle nicht unterbrochen wird. Hierzu kann es notwendig sein, die beiden Enden vor der Montage entsprechend zu bearbeiten.

Vorteilhafterweise sind die Justiervorrichtung 4 und die Spannvorrichtung 5 gleich aufgebaut und diametral auf der Welle 6 angeordnet. So entsteht bei einer Rotation der Welle keine Unwucht. Einen möglichen Aufbau von Justiervorrichtung 4 und Spannvorrichtung 5 zeigen die Figuren 1 und 2. Die Enden von Maßband 1 bzw. Spannring 3 sind auf Justierklötzen 8 befestigt, deren Abstände jeweils über Justierschrauben 9 eingestellt werden können. Die radiale Ausdehnung der Justiervorrichtung 4 und der Spannvorrichtung 5 sollte die radiale Dicke der elastischen Schicht nicht übersteigen, da dann ein kleiner Abstand vom Lesekopf 7 zur Teilung 10 möglich ist, und auf der Welle 6 keine Ausnehmungen erfordertich sind. Die Justiervorrichtung 4 und die Spannvorrichtung 5 sollten deshalb auch im Bereich der elastischen Schicht 2 angeordnet sein, wie es in Figur 1 gezeigt ist.

Ein großer Vorteil gegenüber dem Stand der Technik besteht nun darin, daß in der beschriebenen Anordnung die Justage des Stoßes zwischen den Enden das Maßbandes 1 vollständig entkoppelt ist von der Befestigung des Maßbandes 1 auf der Welle 6. Die Stoßjustage kann sogar schon vom Hersteller des Maßbandes 1 durchgeführt werden, der Kunde kann die einfache Endmontage mittels des Spannringes 3 vornehmen, ohne den Stoß des Maßbandes noch einmal zu verändern. Selbstverständlich kann die Stoßjustage auch nach der Montage durchgeführt werden, ohne dabei den montierten Spannring 3 zu lockern.

Eine in tangentialer Richtung T elastische Schicht 2 bewirkt zusätzlich einen Ausgleich von lokalen Ausdehnungen des Spannrings 3, die durch Reibung zwischen Spannring 3 und Welle 6 beim Betätigen der Spannvorrichtung 5 auftreten. Diese Ausdehnungen des Spannrings 3 werden von der elastischen Schicht 3 wegen ihrer Elastizität in tangentialer Richtung T aufgenommen und weitestgehend ausgeglichen.

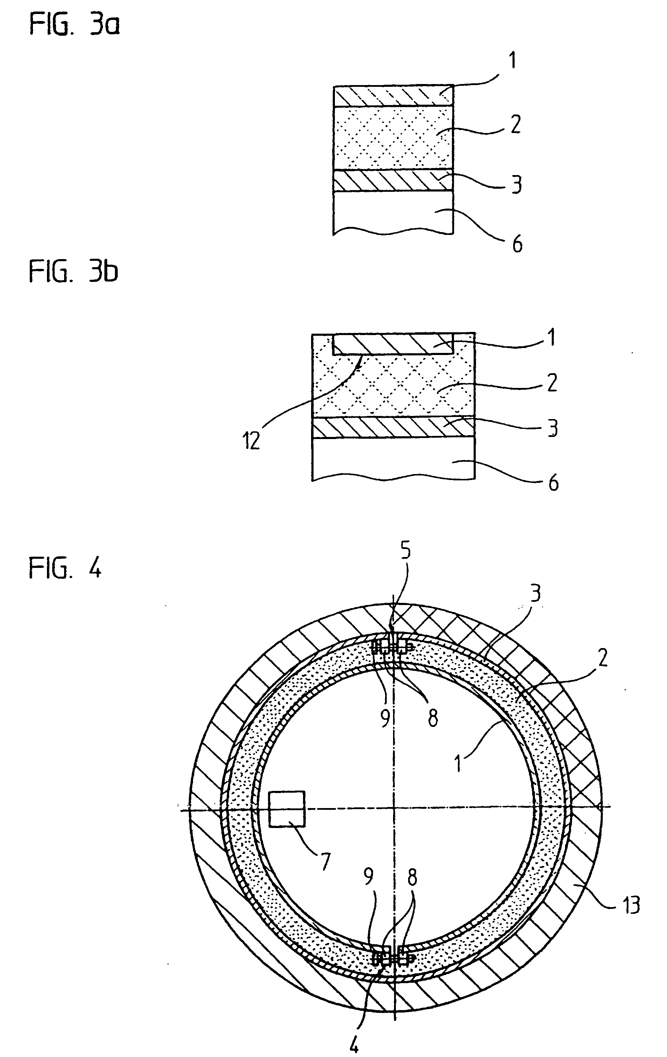

Dieser Effekt kann bei Bedarf noch verstärkt werden, wenn das Maßband 1 nicht einfach wie in Figur 3a fest mit der elastischen Schicht 2 verbunden ist, sondern wie in Figur 3b das Maßband 1 und die elastische Schicht 2 eine Gleitpaarung 12 bilden. Diese Maßnahme ist insbesondere sinnvoll, wenn eine Elastizität der elastischen Schicht 2 in tangentialer Richtung T nicht oder nicht ausreichend gegeben ist. Um dabei eine Stabilität in axialer Richtung zu erhalten, kann es vorteilhaft sein, eine Nut in der elastischen Schicht 2 anzubringen, die das Maßband 1 aufnimmt. Die Gleitpaarung 12 kann beispielsweise erzeugt werden, indem ein nicht gezeichnetes Teflonband zwischen Maßband 1 und elastischer Schicht 2 eingelegt wird. Auf diesem Teflonband kann das Maßband 1 sowohl bei der Stoßjustage über Justiervorrichtung 4 als auch beim Spannen das Spannrings 3 gleiten, wodurch Spannungen gleichmäßig über den gesamten Umfang des Maßbandes 1 verteilt werden. Eine weitere Möglichkeit zur Bildung einer Gleitpaarung 12 wäre die Verwendung von zwei über einen viskosen Zwischenfilm haftenden Streifen, von denen einer bereits das Maßband 1 bilden kann. Eine solche Anordnung ist in der DE19611983C1 ausführlich beschrieben.

Es ergeben sich aus der beschriebenen Anordnung aber noch weitere Vorteile. So bewirkt die elastische Schicht 2 durch ihre Elastizität in radialer Richtung R einen Ausgleich kleinerer Abweichungen von der Kreisform der Welle 6, die geforderte Bearbeitungsgüte der Oberfläche der Welle 6 sinkt also im Vergleich zu einer direkten Befestigung des Maßbandes 1 auf der Welle 6. Die elastische Schicht 2 bewirkt dabei außerdem eine Selbstzentrierung des Maßbandes 1 zur Achse der Welle 6.

Es soll anhand von Figur 4 noch eine weitere Anwendung der Erfindung beschrieben werden. In manchen Fällen ist es vorteilhaft, ein Maßband an einem Innendurchmesser etwa einer Hohlwelle 13 anzubringen. Das Maßband 1 und der Lesekopf 7 sind dann durch die Hohlwelle 13 vor Verschmutzung oder Beschädigung etwa durch umherfliegende Späne geschützt. Der Aufbau ist dem aus Figur 1 sehr ähnlich, es dreht sich lediglich die Reihenfolge von Spannring 3, elastischer Schicht 2 und Maßband 1 um, letzteres liegt nun der Achse der Hohlwelle 13 am nächsten, die Teilung 10 ist zum jetzt innen liegenden Lesekopf 7 orientiert. Um das Maßband 1 in der Hohlwelle 13 zu befestigen, muß der Spannring 3 nun durch die Spannvorrichtung 5 auf Druck belastet werden. Alle bei der vorherigen Anordnung mit außen liegendem Maßband 1 beschriebenen Vorteile ergeben sich in gleicher Weise auch bei der Anordnung nach Figur 4.

Es sei noch erwähnt, daß es erforderlich sein kann, nach erfolgter Montage das Maßband 1 drehstarr mit der Welle 6 (oder der Hohlwelle 13) zu verbinden, um eine Verdrehung der Teilung 10 relativ zur Welle 6 zu verhinden. Eine Elastizität in tangentialer Richtung T der elastischen Schicht 2 ermöglicht eine solche Bewegung, etwa bei einer Beschleunigung der Drehbewegung der Welle. Falls eine oder mehrere Referenzmarken 11 vorhanden sind, liegt eine Fixierung das Maßbandes 1 insbesondere an diesen Stellen nahe.

Die Erfindung eignet sich für Maßbänder 1 und Leseköpfe 7 verschiedenster Art, die beispielsweise auf optischen, magnetischen, kapazitiven oder induktiven Prinzipien beruhen.

## Patentansprüche

1. Winkelmeßsystem mit einem Maßband (1), das eine Justiervorrichtung (4) zum genauen Einstellen des Stoßes der beiden Maßbandenden aufweist, **dadurch gekennzeichnet, daß** das Maßband (1) über eine in radialer Richtung R elastische Schicht (2) auf einem Spannring (3) angebracht ist, der eine Spannvorrichtung (5) zum Befestigen des Maßbanddes (1) auf einem zu vermessenden Körper (6) aufweist.

2. Winkelmeßsystem nach Anspruch 1, **dadurch gekennzeichnet, daß** die elastische Schicht (2) aus Acrylatschaum - Klebeband oder aus Elastomeren besteht.

3. Winkelmeßsystem nach Anspruch 1, **dadurch gekennzeichnet, daß** die elastische Schicht (2) in tangentialer Richtung T elastisch ist.

4. Winkelmeßsystem nach Anspruch 1, **dadurch gekennzeichnet, daß** die Justiervorrichtung (4) und die Spannvorrichtung (5) gleich aufgebaut sind.

5. Winkelmeßsystem nach Anspruch 1, **dadurch gekennzeichnet, daß** die Justiervorrichtung (4) aus Justierklötzen (8) besteht, an denen die Enden des Maßbandes (1) befestigt sind, und deren Abstand über Justierschrauben (9) eingestellt werden kann.

6. Winkelmeßsystem nach Anspruch 1, **dadurch gekennzeichnet, daß** die Justiervorrichtung (4) und die Spannvorrichtung (5) diametral angeordnet sind.

7. Winkelmeßsystem nach Anspruch 1, **dadurch gekennzeichnet, daß** die radiale Ausdehnung der Justiervorrichtung (4) und der Spannvorrichtung (5) nicht größer ist als die Dicke der elastischen Schicht (2).

8. Winkelmeßsystem nach einem der Ansprüche 1 - 7, **dadurch gekennzeichnet, daß** das Maßband (1) und die elastische Schicht (2) fest miteinander verbunden sind.

9. Winkelmeßsystem nach einem der Ansprüche 1 - 7, **dadurch gekennzeichnet, daß** das Maßband (1) und die elastische Schicht (2) eine Gleitpaarung bilden.

10. Winkelmeßsystem nach einem der Ansprüche 1 - 9, **dadurch gekennzeichnet, daß** der Spannring (3) auf einem äußeren Umfang des zu vermessenden Körpers (6) angebracht und auf Zug belastet ist, und die elastische Schicht (2) und Maßband (1) weiter außen liegende Schichten bilden.

11. Winkelmeßsystem nach einem der Ansprüche 1 - 9, **dadurch gekennzeichnet, daß** der Spannring (3) auf einem inneren Umfang des zu vermessenden Körpers (13) angebracht und durch die Spannvorrichtung (5) auf Druck belastet ist, und die elastische Schicht (2) und das Maßband (1) weiter innen liegende Schichten bilden.

## Claims

1. Angular position measuring system having a measuring tape (1) which has an adjusting device (4) for adjusting exactly the joint between the two ends of the measuring tape, **characterised in that** the measuring tape (1) is attached to a clamping ring (3) via a layer (2) which is elastic in a radial direction R, said clamping ring (3) having a clamping device (5) for securing the measuring tape (1) on a body (6) to be measured.

2. Angular position measuring system according to claim 1, **characterised in that** the elastic layer (2) is formed from an acrylate-foam adhesive tape or elastomers.

3. Angular position measuring system according to claim 1, **characterised in that** the elastic layer (2) is elastic in a tangential direction T.

4. Angular position measuring system according to claim 1, **characterised in that** the adjusting device (4) and the clamping device (5) are of the same design.

5. Angular position measuring system according to claim 1, **characterised in that** the adjusting device (4) comprises adjusting blocks (8) to which the ends of the measuring tape (1) are secured and the spacing of which can be adjusted via adjusting screws (9).

6. Angular position measuring system according to claim 1, **characterised in that** the adjusting device (4) and the clamping device (5) are arranged diametrically opposite one another.

7. Angular position measuring system according to claim 1, **characterised in that** the radial expansion of the adjusting device (4) and of the clamping device (5) is not greater than the thickness of the elastic layer (2).

8. Angular position measuring system according to one of claims 1-7, **characterised in that** the measuring tape (1) and the elastic layer (2) are fixedly connected to one another.

9. Angular position measuring system according to one of claims 1-7, **characterised in that** the measuring tape (1) and the elastic layer (2) form a slide pairing.

10. Angular position measuring system according to one of claims 1-9, **characterised in that** the clamping ring (3) is attached to an outer periphery of the body (6) to be measured and is subjected to tension, and the elastic layer (2) and the measuring tape (1) form layers lying further to the outside.

11. Angular position measuring system according to one of claims 1-9, **characterised in that** the clamping ring (3) is attached to an inner periphery of the body (13) to be measured and is subjected to compression by the clamping device (5), and the elastic layer (2) and the measuring tape (1) form layers lying further to the inside.

## Revendications

1. Système de mesure d'angles comprenant un ruban gradué (1) pourvu d'un dispositif d'ajustage (4) pour le réglage précis du joint entre les deux extrémités de ruban, **caractérisé par le fait que** le ruban gradué (1) est monté sur une bague de serrage (3) par l'intermédiaire d'une couche (2) élastique dans la direction radiale R, lequel collier de serrage comporte un dispositif de serrage (5) pour la fixation du ruban gradué (1) sur un corps à mesurer (6).

2. Système de mesure d'angles selon la revendication 1, **caractérisé par le fait que** la couche (2) élastique est formée d'un ruban adhésif à base d'acrylate expansé ou d'élastomères.

3. Système de mesure d'angles selon la revendication 1, **caractérisé par le fait que** la couche (2) élastique est élastique dans la direction tangentielle T.

4. Système de mesure d'angles selon la revendication 1, **caractérisé par le fait que** le dispositif d'ajustage (4) et le dispositif de serrage (5) sont de construction identique.

5. Système de mesure d'angles selon la revendication 1, **caractérisé par le fait que** le dispositif d'ajustage (4) est formé de blocs de réglage (8) auxquels sont fixées les extrémités du ruban gradué (1) et dont l'écartement peut être réglé au moyen de vis de réglage (9).

6. Système de mesure d'angles selon la revendication 1, **caractérisé par le fait que** le dispositif d'ajustage (4) et le dispositif de serrage (5) sont diamétralement opposés.

7. Système de mesure d'angles selon la revendication 1, **caractérisé par le fait que** la dimension radiale du dispositif d'ajustage (4) et du dispositif de serrage (5) n'est pas supérieure à l'épaisseur de la couche (2) élastique.

8. Système de mesure d'angles selon une des revendications 1 à 7, **caractérisé par le fait que** le ruban gradué (1) et la couche (2) élastique sont solidaires l'un de l'autre.

9. Système de mesure d'angles selon une des revendications 1 à 7, **caractérisé par le fait que** le ruban gradué (1) et la couche (2) élastique forment un assemblage glissant.

10. Système de mesure d'angles selon une des revendications 1 à 9, **caractérisé par le fait que** la bague de serrage (3) est montée sur une surface extérieure du corps à mesurer (6) et est sollicitée en traction et que la couche (2) élastique et le ruban gradué (1) forment des couches situées plus à l'extérieur.

11. Système de mesure d'angles selon une des revendications 1 à 9, **caractérisé par le fait que** la bague de serrage (3) est montée sur une surface intérieure du corps à mesurer (13) et est sollicitée en compression et que la couche (2) élastique et le ruban gradué (1) forment des couches situées plus à l'intérieur.
